# EUROPEAN PATENT SPECIFICATION

(11) **EP 2 944 779 B1**
(45) Date of publication and mention of the grant of the patent: **16.11.2016**
(21) Application number: 15167437.1
(22) Date of filing: 12.05.2015
(51) Int. Cl.: F01N 3/20

(54) **EXHAUST SYSTEM FOR EXHAUST GAS AFTER-TREATMENT IN AN INTERNAL COMBUSTION ENGINE PROVIDED WITH A TANK FOR THE COLLECTION OF SOLID MATRICES TO STORE AMMONIA**
ABGASSYSTEM FÜR ABGASNACHBEHANDLUNG IN EINEM VERBRENNUNGSMOTOR MIT EINEM BEHÄLTER FÜR SPEICHERMATERIAL ZUR SPEICHERUNG VON AMMONIAK
SYSTÈME D'ÉCHAPPEMENT POUR POST-TRAITEMENT DE GAZ D'ÉCHAPPEMENT DANS UN MOTEUR À COMBUSTION INTERNE ÉQUIPÉ D'UN RÉSERVOIR POUR UNE STRUCTURE SOLIDE DE STOCKAGE D'AMMONIAC

(30) Priority: 12.05.2014 IT BO20140283
(43) Date of publication of application: 18.11.2015
(73) Proprietor: Magneti Marelli S.p.A., 20011 Corbetta (MI) (IT)
(72) Inventor: OSBAT, Giovanni, 48025 RIOLO TERME (IT)
(74) Representative: Maccagnan, Matteo

(56) References cited:
- EP-A1- 1 977 817
- WO-A1-2012/134519
- CN-U- 202 673 413

## Description

### TECHNICAL FIELD

The present invention relates to an exhaust system for exhaust gas after-treatment in an internal combustion engine provided with a tank for the collection of solid matrices able to store ammonia.

### PRIOR ART

As known, future international standards related to the containment of automotive polluting gas emissions (the so-called "Euro 5" and "Euro 6" or "Tier 2 Bin 5" standards) will contemplate a very low limit for the NOx molecules which may be released into the atmosphere.

Respecting such limits is particularly critical for diesel engines; for this reason, it has been suggested to equip the exhaust system of a diesel engine with a further SCR (Selective Catalytic Reduction) catalyzer suited to convert the NOₓ (NO₂ or NO) molecules into nitrogen (N₂), which is an inert gas, and water (H₂O). The reduction reaction of NOx molecules into nitrogen (N) is difficult to obtain without using an appropriate reducing agent, which is generally ammonia (NH₃). The reducing agent must be injected into the exhaust system upstream of the SCR catalyzer in order to be mixed with the exhaust gases before entering the SCR catalyzer.

However, storing ammonia in a car is not advisable due to evident safety reasons related to the fact that ammonia is toxic. Consequently, it has been suggested to store and inject a water solution of urea, because urea is broken down into ammonia by effect of the exhaust gas heat and also in part by catalytic effect.

The exhaust system is thus provided with an aqueous urea solution feeding device which comprises an exhaust duct, a tank comprising the aqueous urea solution and an electromagnetic injector which is provided to inject the pressurized aqueous urea solution coming from the tank into the exhaust duct. The feeding device comprises, in turn, a pump which draws from the tank to feed the aqueous urea solution and send it pressurized to the electromagnetic injector and which is submerged inside the tank.

Exhaust systems of the above described type are known for example from WO2012134519 and EP1977817.

However, the exhaust systems of the type described above have some drawbacks. In particular, the assembly and the subsequent maintenance of said exhaust system is made difficult by the high number of components; additionally, the tanks which contain the aqueous urea solution have a rather considerable weight and size and finally accurate metering of the ammonia which is injected into the exhaust duct cannot be guaranteed.

### DESCRIPTION OF THE INVENTION

It is thus the object of the present invention to provide an exhaust system for exhaust gas after-treatment in an internal combustion engine provided with a tank for the collection of solid matrices able to store ammonia which is free from the drawbacks of the prior art and which is easy and cost-effective to make.

According to the present invention, an exhaust system for exhaust gas after-treatment in an internal combustion engine provided with a tank for the collection of solid matrices able to store ammonia as disclosed in the accompanying claims is provided.

### BRIEF DESCRIPTION OF THE DRAWINGS

The present invention will now be described with reference to the accompanying drawings, which show a non-limitative embodiment thereof, in which:
- figure 1 is a diagrammatic view of an exhaust system of an internal combustion engine provided with a tank for the collection of solid matrices able to store ammonia made according to the present invention;
- figure 2 is a diagrammatic view of a first embodiment of the tank shown in figure 1;
- figure 3 is a perspective view of a solid matrix able to store ammonia in figure 2; and

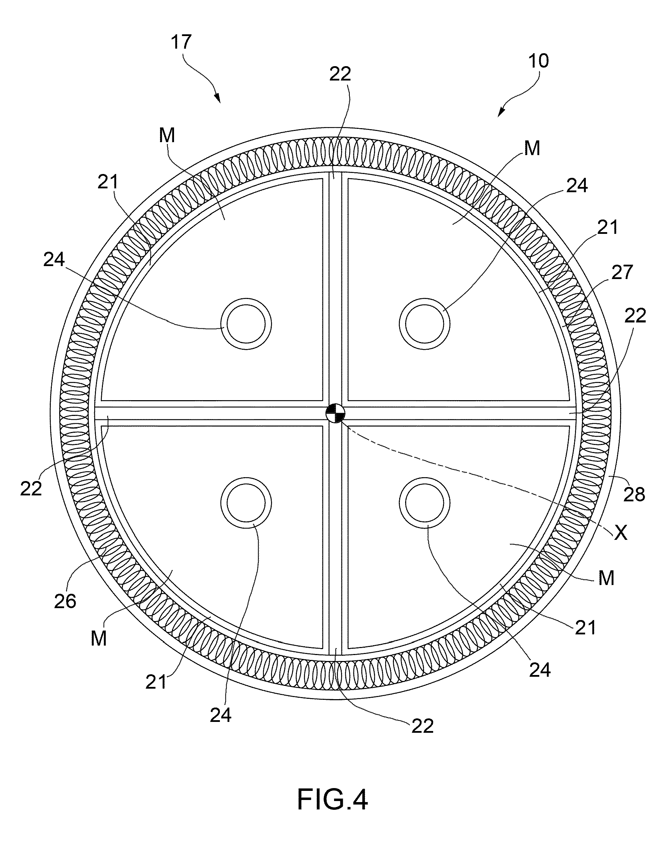

- figure 4 is a diagrammatic view of a second embodiment of the tank shown in figure 1.

### PREFERRED EMBODIMENTS OF THE INVENTION

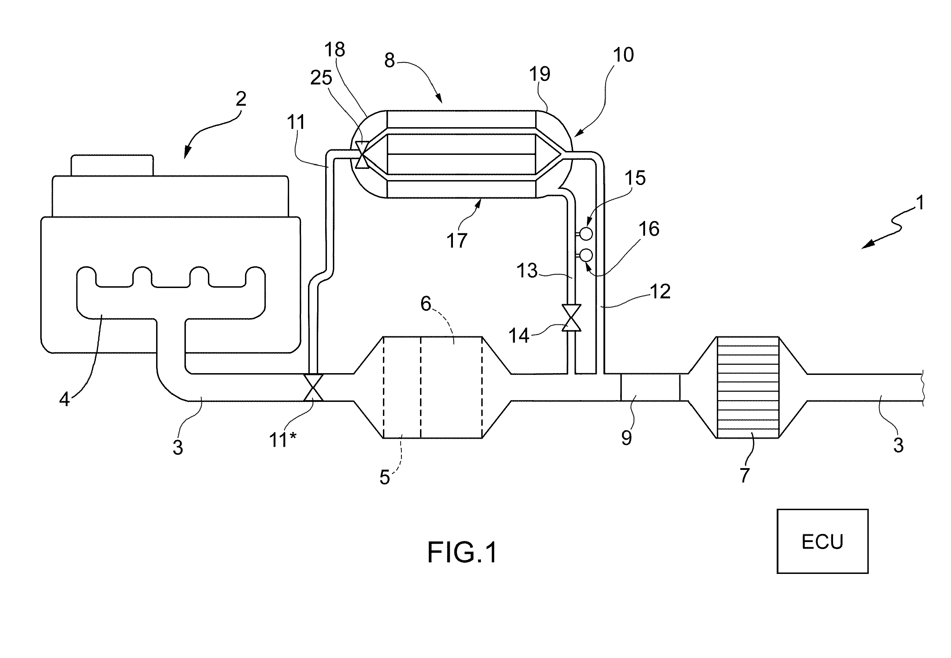

In figure 1, numeral 1 indicates as a whole an exhaust system of an internal combustion engine 2 working in accordance with the "diesel" cycle (i.e. fed with diesel fuel or the like).

The exhaust system 1 emits the gases produced by combustion into the atmosphere and comprises an exhaust duct 3 which departs from an exhaust manifold 4 of the internal combustion engine 2. An oxidizing catalyzer 5 and a particulate trap 6 are arranged along the exhaust duct 3. In figure 1, the oxidizing catalyzer 5 and the particulate trap 6 are arranged in sequence in a same common tubular container.

Furthermore, an SCR (Selective Catalytic Reduction) catalytic system 7 for the post-treatment of the NOx molecules (NO and NO₂) is arranged along the exhaust duct 3 and downstream of the oxidizing catalyzer. According to a variant shown in figure 1, the SCR catalyzer system 7 comprises a single SCR catalyzer 7. According to a further variant (not shown), the SCR catalyzer system 7 comprises a set (normally three) of catalyzers arranged in series, which together optimize the SCR function for post-treatment of NOₓ molecules.

Immediately upstream of the catalytic system 7, an introduction device 8, coupled to the exhaust pipe 3 is provided and arranged to introduce ammonia (NH₃) into the exhaust duct 3 itself, which ammonia works as reducer in the catalytic system 7 to facilitate the breakdown creation of the NOx molecules into nitrogen (N₂) and water (H₂O).

According to a preferred variant, a static mixer 9 is inserted along the exhaust duct 3 and at the introduction device 8, the function of which is to promote the mixing of the ammonia in the exhaust gases making the dispersion of the ammonia in the exhaust gases more uniform. Preferably, the static mixer is arranged along the exhaust duct 3 downstream of the introduction device 8. According to a further variant, the static mixer is arranged along the exhaust duct 3 upstream of the introduction device 8.

The introduction device 8 comprises a tank 10 containing ammonia, a duct 11, which originates from the exhaust duct 3 and leads into the tank 10 and a bypass valve 11*, which allows to convey a portion of exhaust gases flowing in the exhaust pipe 3 itself towards the tank 10. The introduction device 8 further comprises a duct 12, which originates from the tank 10 and leads into the exhaust pipe 3 to re-introduce the exhaust gases 3 which have crossed the tank 10 into the exhaust duct. According to a preferred embodiment, the bypass valve 11* is a three-way valve and is arranged along the exhaust duct 3 at the point in which the duct 11 originates. Furthermore, the introduction device 8 comprises a further ammonia delivery duct 13 which originates from the tank 10 and leads into the exhaust duct 3 (preferably downstream of the introduction point of the duct 12) to feed the ammonia into the exhaust pipe 3 itself. A shut-off valve 14 is also provided along the ammonia delivery duct 13 to adjust the amount of ammonia to be introduced into the exhaust duct 3. Finally, a pressure sensor 15 and a temperature sensor 16 are housed along the ammonia delivery duct 13 which are connected to an electronic control unit ECU which receives a signal indicative of the amount of ammonia which is required to abate the NOx and controls the shut-off valve 14 as a function of the amount of ammonia which is required to abate the NOx and the signals coming from the pressure sensor 15 and the temperature sensor 16.

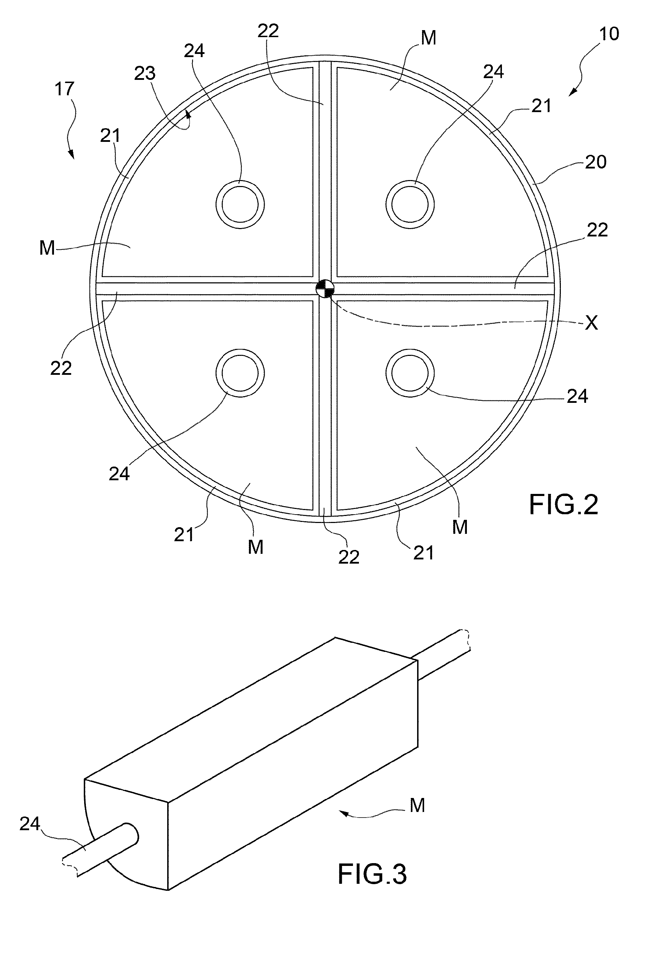

Figure 2 shows the tank 10 which encloses inside the solid matrices able to store ammonia in greater detail.

In particular, the tank 10 comprises a tube-shaped outer body 17 in which the solid matrices M are inserted. The containing body 17 has a cylindrical symmetry about a symmetry axis X and is closed, at its ends, by a front wall and by a rear wall, indicated by reference numerals 18 and 19, respectively, in figure 1.

The containing body 17 is defined by an outer cylindrical wall 20 coaxial to the symmetry axis X.

The cylindrical outer wall 20 is made of steel, preferably stainless steel, or another metal having equivalent features. The cylindrical outer wall 20 is made of a material able to withstand the high temperatures which are generated in the tank 10 (equal to approximately 2-3 bar). According to a preferred variant, the outer cylindrical wall 20 is thermally insulated.

A chamber having a circular section in which the ammonia is housed, as described in greater detail below, is defined inside the containing body.

The chamber is internally divided into a number of ducts 21 by means of radial wings 22. In particular, the chamber is divided internally by means of a number of radial wings 22 uniformly distributed about the symmetry axis X so as to divide the chamber into ducts 21 of the same size. Each radial wing 22 extends to an inner surface 23 of the cylindrical outer wall 20. According to a preferred variant, the chamber is internally divided into four ducts 21 by means of four radial wings 22 arranged orthogonally with respect to one another.

According to a further variant (not shown) the chamber is internally divided into three ducts 21 by means of three radial wings 22 arranged so as to form 120° angles with respect to one another.

According to a further variant (not shown), any number k of radial wings 22 are provided, which are preferably uniformly distributed about the symmetry axis X to define k ducts 21 of equal size.

According to a further variant (not shown), the radial wings 22 are arranged in non-uniform manner about the symmetry axis X so as to divide the chamber into ducts 21 of mutually different size.

According to a preferred variant, the radial wings 22 extend for the entire length of the containing body 17.

According to a preferred variant, the radial wings 22 are suited to mechanically support the solid matrices M and are made of steel, preferably stainless steel, or of another material having equivalent features.

According to a further variant, the radial wings 22 are made of a material with a high thermal conductivity, so as to increase the heat exchange with the solid matrices M.

Each radial duct 21 is suited to contain inside a solid matrix M able to store ammonia. The tank 10 can house one solid matrix M for each duct 21, i.e. four mutually equal solid matrices M for each of the ducts 21.

Each solid matrix M is made of any solid material able to store ammonia. Among these, for example, particularly suited are magnesium chloride (Mg(NH3)6Cl2), calcium chloride (Ca(NH3)8Cl2) or strontium chloride (Sr(NH3)8Cl2) and any other material having equivalent features and able to store ammonia.

Furthermore, each duct 21 comprises a channel 24, which extends for the entire length of the respective duct 21 and runs substantially parallel to the symmetry axis. Each channel 24 is suited to allow the passage of exhaust gases coming from the exhaust duct 3 which are conveyed through the duct 11 and then flow into the duct 12 which leads back into the exhaust duct 3 to reintroduce the exhaust gases which have crossed the tank 10 into the exhaust duct 3. The exhaust gases cross the channels 24 at rather high temperatures, in the order of approximately 190°C, and are suited to allow the passage of heat towards the solid matrix M of the respective duct 21. As the channels 24 are made to promote the passage of heat from the exhaust gases to the solid matrices M, they are made of a material with a high thermal conductivity and are arranged in a central position of the respective solid matrices M (i.e. of the respective channel 21) to allow a substantially uniform heating of the solid matrices M.

According to a preferred variant, the exhaust gas flow which is introduced into each channel 24 is adjusted by means of a specific adjustment valve 25 (only one of which is shown in figure 1); each adjustment valve 25 is connected to the electronic control unit ECU and is controlled by the electronic control unit ECU as a function of the amount of ammonia required to abate the NOx.

According to a further variant, the exhaust gas flow which is introduced into any number of channels 24 (for example, into a pair of channels 24) is adjusted by means of a specific adjustment valve 25 (only one of which is shown in figure 1); each adjustment valve 25 is connected to the electronic control unit ECU and is controlled by the electronic control unit ECU as a function of the amount of ammonia required to abate the NOx.

In use, the electronic control unit ECU receives a signal indicative of the amount of ammonia which is required to abate the NOx and further receives the signals coming from the pressure sensor 15 and the temperature sensor 16.

In case of malfunctioning, which occurs, for example, if the pressure sensor 15 and/or the temperature sensor 16 detect pressure and/or temperature values which are not comprised within the range of safety values, the introduction device 8 can be bypassed by closing the three-way bypass valve 11* and sending the entire exhaust gas flow into the exhaust duct 3.

As a function of the amount of ammonia which is required to abate the NOx, the electronic control unit ECU determines which and how many adjustment valves 25 must be activated to allow the passage of the exhaust gases in the respective channels 24.

The heat transmitted by the passage of exhaust gases to the solid matrices M contained in the ducts 21 allows the ammonia to be desorbed by the material able to store ammonia. If radial wings 22 made of a material with high heat conductivity are used, the heat exchange surface with the solid matrices M is increased so as to make the desorption process of the ammonia from the material able to store ammonia more rapid.

The ammonia is thus present in pressurized gas state in the tank 10; the ammonia produced by each duct 21 is collected and conveyed into the delivery duct 13 of the ammonia; the introduction of the pressurized ammonia in the exhaust duct 3 is then adjusted as a function of the amount of ammonia which is required to abate the NOx through the shut-off valve 14 which is controlled by the electronic control unit ECU.

According to a variant (not shown), the heat needed to heat the solid matrices M is obtained by means of a heat recovery circuit of the cooling liquid of the internal combustion engine 2. In particular, the heat obtained by means of the heat exchange with the coolant of the internal combustion engine 2 exiting the internal combustion engine 2 which is conveyed through a supply duct to the tank 10. The coolant liquid crosses the tank 10 in direction parallel to the symmetry axis X running in the ducts 21 and exchanging heat with the solid matrices M and afterward, by crossing a return duct, is re-introduced into the internal combustion engine 2. The bypass valve 11* is suited to adjust the amount of coolant fed to the tank 10, which in this case is arranged along the supply duct 10.

According to a further variant, the tank 10 also comprises a heater 26 suited to accelerate the desorption of the ammonia into material able to store ammonia in the solid matrices M. In particular, the tube-shaped outer body 17 in which the solid matrices M are inserted comprise an inner wall 27, having a cylindrical symmetry about the symmetry axis X and made of a material having a high thermal conductivity; the outer wall 28, having a cylindrical symmetry about the symmetry axis X and made of a material made of steel, preferably stainless steel, or another material having equivalent features and preferably thermally insulated; and the heater 26 also having a cylindrical symmetry about the symmetry axis X interposed between the inner wall 27 and the outer wall 28. The heater 26 preferably extends for the entire length of the outer body 17 and defines a liner which internally surrounds the solid matrices M and, if activated, can provide the heat needed to accelerate the desorption process of the ammonia from the material able to store ammonia in the solid matrices M. The heater 26 is connected to the electronic control unit ECU and is controlled by the electronic control unit ECU as a function of the amount of ammonia required to abate the NOx. The heater 26 consists of a plurality of heating modules which can be activated either independently or jointly as a function of the amount of ammonia which is required to abate the NOx; the electric power is provided only to activate the necessary heating modules which work on the solid matrices M contained in the respective ducts 21.

It is apparent that the exhaust system 1 provided with exhaust gas post-treatment in an internal combustion 2 described hereto is entirely independent from the type of tank 10 used. For example, a tank for the collection of solid matrices able to store ammonia comprising a containing body may be provided with a symmetry axis and internally divided into a number of longitudinal sections by means of a number of partitions arranged transversely to the symmetry axis; wherein each longitudinal section is divided, in turn, into a number of radial sections by means of a plurality of radial wings, which are distributed around the symmetry axis; wherein each radial section is suited to house a solid matrix able to store ammonia inside. Wherein the tank is preferably made as described in patent application BO2013A000370, incorporated herein for reference and comprises a heater arranged substantially coaxial to the symmetry axis and provided with a number of heating modules which is preferably equal to the number of longitudinal sections, which can be activated independently from one another as a function of the ammonia needs of the exhaust system provided with exhaust gas post-treatment, in which each heating module is suited to heat a respective longitudinal section.

Both the tank 10 for the collection of solid matrices M able to store ammonia and the exhaust system 1 provided with exhaust gas after-treatment in an internal combustion engine 2 described hereto has many advantages. Firstly, they are simple and cost-effective to make, compact and allow an efficient management of the exhaust gases and of the electric power to be supplied to the heater 26 thus considerably reducing the operating time of the tank 10 for the collection of solid matrices M able to store ammonia.

## Claims

1. An exhaust system (1) for an internal combustion engine (2) for exhaust gas after-treatment comprising:
an exhaust duct (3), which originates from an exhaust manifold of the internal combustion engine (2);
a tank (10) for the collection of a number of solid matrices (M) able to store ammonia comprising a containing body (17), which is provided with a symmetry axis (X); the containing body (17) being divided, on the inside, into a number of radial ducts (21) by means of a plurality of radial wings (22), which are distributed around the symmetry axis (X); wherein each radial duct (21) is suited to house on the inside a solid matrix (M) able to store ammonia;
an ammonia delivery duct (13), which originates from the tank (10) and leads to the exhaust duct (3); and
a feeding circuit (8) of a heating fluid to the tank (10), made to permit the heat exchange from the heating fluid to said number of solid matrices (M) able to store ammonia; wherein the feeding circuit (8) comprises a bypass valve (11*), which is suited to adjust the quantity of heating fluid fed to the tank (10) ;
the system is **characterized in that** the tank (10) comprises a number of channels (24), which are obtained inside a respective radial duct (21), extends along the entire length of the respective radial duct (21) in a direction substantially parallel to the symmetry axis (X) and is made for the passage of the heating fluid, so as to permit the heat exchange from the heating fluid to the respective solid matrix (M) able to store ammonia.

2. A system according to claim 1 and comprising a number of control valves (25), which are suited to adjust the passage of heating fluid in a group of channels (24) as a function of the quantity of ammonia requested.

3. A system according to claim 1 or 2, wherein the radial wings (22) are made to mechanically support the solid matrices (M) and are made of a material with heat conductivity, so as to increase the heat exchange with said solid matrices (M).

4. A system according one of the preceding claims, wherein the feeding circuit (8) feeds an exhaust gas flow to the tank (10), so as to permit a heat exchange from the exhaust gases to said number of solid matrices (M) able to store ammonia; the feeding circuit (8) comprises an exhaust gas drawing duct (11), which originates from the exhaust duct (3) and extends up to the tank (10), and a re-introduction duct (12), which re-introduces the exhaust gases exiting the tank (10) into the exhaust duct (3); the bypass valve (11*), which is suited to adjust the quantity of exhaust gases fed to the tank (10), being arranged along the exhaust duct (3) at the spot where the exhaust gas drawing duct (11) originates.

5. A system according to one of the claims 1 to 3, wherein the feeding circuit (8) feeds a flow of coolant of the internal combustion engine (2) to the tank (10), so as to permit the heat exchange from the coolant to said number of solid matrices (M) able to store ammonia; the feeding circuit (8) comprises a duct for the delivery of coolant to the tank (10) and a return duct to permit the return of coolant from the tank (10); the bypass valve (11*), which is suited to adjust the quantity of coolant fed to the tank (10), being arranged along the delivery duct.

6. A system according to any of the previous claims and comprising a shut-off valve (14), which is arranged along the ammonia delivery duct (13) so as to adjust the quantity of ammonia to be introduced into the exhaust duct (3).

7. A system according to any of the previous claims and comprising a pressure sensor (15) and/or a temperature sensor (16), which are arranged along the ammonia delivery duct (13).

8. A system according to any of the previous claims and comprising an electronic control unit (ECU), which is suited to control the shut-off valve (14) and the bypass valve (11*) as a function of the demand of ammonia to be introduced into the exhaust duct (3).

9. A system according to any of the previous claims, wherein the tank (10) comprises a containing body, which is provided with a symmetry axis and is divided, on the inside, into a number of longitudinal sections by means of a number of partitions, which are arranged transversely to the symmetry axis; wherein each longitudinal section is divided, in turn, into a number of radial sections by means of a plurality of radial wings, which are distributed around the symmetry axis; wherein each radial section is suited to house on the inside a solid matrix (M) able to store ammonia.

## Patentansprüche

1. Abgassystem (1) für einen Verbrennungsmotor (2) zur Abgasnachbehandlung, enthaltend:
eine Abgasleitung (3), die von einem Auspuffkrümmer des Verbrennungsmotors (2) ausgeht;
einen Tank (10) zum Aufnehmen einer Anzahl von Feststoffmatrizen (M), die in der Lage sind, Ammoniak zu speichern, der einen Behälterkörper (17) aufweist, der mit einer Symmetrieachse (X) versehen ist; welcher Behälterkörper im Inneren in eine Anzahl von radialen Leitungen (21) durch eine Mehrzahl von radialen Flügeln (22) unterteilt ist, die um die Symmetrieachse (X) verteilt sind; wobei jede radiale Leitung (21) dafür geeignet ist, im Inneren eine Feststoffmatrix (M) aufzunehmen, die in der Lage ist, Ammoniak zu speichern;
eine Ammoniakabgabeleitung (13), die von dem Tank (10) ausgeht und zu der Abgasleitung (3) führt; und
einen Speisekreislauf (8) eines Heizfluids zu dem Tank (10), die so ausgeführt ist, dass sie den Wärmeaustausch von dem Heizfluid zu der Anzahl von Feststoffmatrizen (M) erlaubt, die in der Lage sind, Ammoniak zu speichern; wobei der Speisekreislauf (8) ein Umgehungsventil (11*) aufweist, welches dafür geeignet ist, die dem Tank (10) zugeführte Menge an Heizfluid einzustellen;
welches System **dadurch gekennzeichnet ist, dass** der Tank (10) eine Anzahl von Kanälen (24) aufweist, die innerhalb einer jeweiligen radialen Leitung (21) erhalten werden, sich über die gesamte Länge der jeweiligen radialen Leitung (21) in einer zu der Symmetrieachse (X) im Wesentlichen parallelen Richtung erstrecken und für den Durchtritt von Heizfluid ausgeführt sind, um so den Wärmeaustausch von dem Heizfluid zu der jeweiligen Feststoffmatrix (M), die fähig ist, Ammoniak zu speichern, zu erlauben.

2. System nach Anspruch 1, enthaltend eine Anzahl von Steuerventilen (25), die dafür geeignet sind, den Durchtritt von Heizfluid in eine Gruppe von Kanälen (24) als Funktion der erforderlichen Ammoniakmenge einzustellen.

3. System nach Anspruch 1 oder 2, wobei die radialen Flügel (22) so gestaltet sind, dass sie die Feststoffmatrizen (M) mechanisch halten, und aus einem wärmeleitfähigen Material hergestellt sind, sodass sie den Wärmeaustausch mit den Feststoffmatrizen (M) erhöhen.

4. System nach einem der vorhergehenden Ansprüche, wobei der Speisekreislauf (8) einen Abgasstrom zu dem Tank (10) führt, um so einen Wärmeaustausch von den Abgasen zu der Anzahl der Feststoffmatrizen (M), die in der Lage sind, Ammoniak zu speichern, zu erlauben; wobei der Speisekreislauf (8) eine Abgasabzugsleitung (11), die von der Abgasleitung (3) ausgeht und sich bis zu dem Tank (10) erstreckt, und eine Rückführleitung (12) aufweist, die die aus dem Tank (10) austretenden Abgase in die Abgasleitung (3) zurückführt; wobei das Umgehungsventil (11*), das dafür geeignet ist, die dem Tank (10) zugeführte Abgasmenge einzustellen, entlang der Abgasleitung (3) an der Stelle vorgesehen ist, von der die Abgasabzugsleitung (11) ausgeht.

5. System nach einem der Ansprüche 1 bis 3, wobei der Speisekreislauf (8) einen Kühlmittelstrom des Verbrennungsmotors (2) zu dem Tank (10) führt, um so den Wärmeaustausch von dem Kühlmittel zu der Anzahl der Feststoffmatrizen (M), die in der Lage sind, Ammoniak zu speichern, zu erlauben; wobei der Speisekreislauf (8) eine Leitung zur Zufuhr von Kühlmittel zu dem Tank (10) und eine Rückführleitung, um die Rückführung des Kühlmittels von dem Tank (10) zu erlauben, aufweist; wobei das Umgehungsventil (11*), das dafür geeignet ist, die dem Tank (10) zugeführte Kühlmittelmenge einzustellen, entlang Zufuhrleitung angeordnet ist.

6. System nach einem der vorhergehenden Ansprüche, enthaltend ein Absperrventil (14), das entlang der Ammoniakabgabeleitung (13) vorgesehen ist, um die in die Abgasleitung (3) einzuführende Ammoniakmenge einzustellen.

7. System nach einem der vorhergehenden Ansprüche, enthaltend einen Drucksensor (15) und/oder einen Temperatursensor (16), die entlang der Ammoniakabgabeleitung (13) vorgesehen sind.

8. System nach einem der vorhergehenden Ansprüche, enthaltend eine elektronische Steuereinheit (ECU), die dafür geeignet ist, das Absperrventil (14) und das Umgehungsventil (11*) als Funktion der Nachfrage von in die Abgasleitung (3) einzuführendem Ammoniak zu steuern.

9. System nach einem der vorhergehenden Ansprüche, wobei der Tank (10) einen Behälterkörper aufweist, der mit einer Symmetrieachse versehen ist und im Inneren in eine Anzahl von Längsabschnitten mittels einer Anzahl von Trennwänden unterteilt ist, die quer zur Symmetrieachse angeordnet sind; wobei jeder Längsabschnitt wiederum in eine Anzahl von radialen Abschnitten mittels einer Vielzahl von radialen Flügeln unterteilt ist, die um die Symmetrieachse verteilt sind, wobei jeder radiale Abschnitt dafür geeignet ist, im Inneren eine Feststoffmatrix (M) aufzunehmen, die in der Lage ist, Ammoniak zu speichern.

## Revendications

1. Système d'échappement (1) pour un moteur à combustion interne (2) pour post-traitement de gaz d'échappement comprenant :
un conduit d'échappement (3), qui part d'un collecteur d'échappement du moteur à combustion interne (2) ;
un réservoir (10) pour la collecte d'un certain nombre de matrices solides (M) aptes à stocker de l'ammoniac comprenant un corps de confinement (17), qui est doté d'un axe de symétrie (X) ; le corps de confinement (17) étant divisé, à l'intérieur, en un certain nombre de conduits radiaux (21) au moyen d'une pluralité d'ailettes radiales (22), qui sont distribuées autour de l'axe de symétrie (X) ; dans lequel chaque conduit radial (21) est approprié pour loger à l'intérieur une matrice solide (M) apte à stocker de l'ammoniac ;
un conduit de distribution d'ammoniac (13), qui part du réservoir (10) et mène au conduit d'échappement (3) ; et
un circuit d'alimentation (8) d'un fluide chauffant vers le réservoir (10), conçu pour permettre l'échange de chaleur à partir du fluide chauffant vers ledit certain nombre de matrices solides (M) aptes à stocker de l'ammoniac ; dans lequel le circuit d'alimentation (8) comprend une vanne de dérivation (11*), qui est appropriée pour réguler la quantité de fluide chauffant acheminée vers le réservoir (10) ;
le système est **caractérisé en ce que** le réservoir (10) comprend un certain nombre de canaux (24), qui sont obtenus à l'intérieur d'un conduit radial respectif (21), s'étend le long de la longueur tout entière du conduit radial respectif (21) dans une direction sensiblement parallèle à l'axe de symétrie (X) et est conçu pour le passage du fluide chauffant, de sorte à permettre l'échange de chaleur à partir du fluide chauffant vers la matrice solide respective (M) apte à stocker de l'ammoniac.

2. Système selon la revendication 1 et comprenant un certain nombre de vannes de commande (25), qui sont adaptées pour réguler le passage de fluide chauffant dans un groupe de canaux (24) en fonction de la quantité d'ammoniac requise.

3. Système selon la revendication 1 ou 2, dans lequel les ailettes radiales (22) sont conçues pour supporter mécaniquement les matrices solides (M) et elles sont faites d'un matériau à conductivité thermique, de sorte à accroître l'échange de chaleur avec lesdites matrices solides (M).

4. Système selon une des revendications précédentes, dans lequel le circuit d'alimentation (8) alimente un flux de gaz d'échappement vers le réservoir (10), de sorte à permettre un échange de chaleur à partir des gaz d'échappement vers ledit nombre de matrices solides (M) aptes à stocker de l'ammoniac ; le circuit d'alimentation (8) comprend un conduit d'aspiration de gaz d'échappement (11), qui part du conduit d'échappement (3) et s'étend jusqu'au réservoir (10), et un conduit de réintroduction (12), qui réintroduit les gaz d'échappement quittant le réservoir (10) à l'intérieur du conduit d'échappement (3) ; la vanne de dérivation (11*), qui est adaptée pour réguler la quantité de gaz d'échappement alimentée vers le réservoir (10), étant agencée le long du conduit d'échappement (3) à l'emplacement d'où part le conduit d'aspiration de gaz d'échappement (11).

5. Système selon une des revendications 1 à 3, dans lequel le circuit d'alimentation (8) alimente un flux de fluide de refroidissement du moteur à combustion interne (2) vers le réservoir (10), de sorte à permettre l'échange de chaleur à partir du fluide de refroidissement vers ledit nombre de matrices solides (M) aptes à stocker l'ammoniac ; le circuit d'alimentation (8) comprend un conduit pour la distribution de fluide de refroidissement au réservoir (10) et un conduit de retour pour permettre le retour de fluide de refroidissement à partir du réservoir (10) ; la vanne de dérivation (11*), qui est appropriée pour réguler la quantité de fluide de refroidissement alimentée vers le réservoir (10), étant agencée le long du conduit de distribution.

6. Système selon une quelconque des revendications précédentes et comprenant une vanne d'arrêt (14), qui est agencée le long du conduit de distribution d'ammoniac (13) de sorte à réguler la quantité d'ammoniac à introduire dans le conduit d'échappement (3).

7. Système selon une quelconque des revendications précédentes et comprenant un capteur de pression (15) et/ou un capteur de température (16), qui sont agencés le long du conduit de distribution d'ammoniac (13).

8. Système selon une quelconque des revendications précédentes et comprenant un bloc de commande électronique (ECU), qui est approprié pour commander la vanne d'arrêt (14) et la vanne de dérivation (11*) en fonction de la demande en ammoniac à introduire dans le conduit d'échappement (3).

9. Système selon une quelconque des revendications précédentes, dans lequel le réservoir (10) comprend un corps de confinement, qui est doté d'un axe de symétrie et est divisé, à l'intérieur, en un certain nombre de sections longitudinales au moyen d'un certain nombre de cloisons, qui sont agencées transversalement par rapport à l'axe de symétrie ; dans lequel chaque section longitudinale est divisée, à son tour, en un certain nombre de sections radiales au moyen d'une pluralité d'ailettes radiales, qui sont distribuées autour de l'axe de symétrie ; dans lequel chaque section radiale est appropriée pour loger à l'intérieur une matrice solide (M) apte à stocker de l'ammoniac.
